# EUROPEAN PATENT SPECIFICATION

(11) **EP 4 169 586 B1**
(45) Date of publication and mention of the grant of the patent: **17.06.2026**
(21) Application number: 21845453.6
(22) Date of filing: 12.06.2021
(51) Int. Cl.: A62C 3/16, A62C 37/00, A62C 37/50, A62C 35/10

(54) **FIRE EXTINGUISHING SYSTEM AND FAULT DETERMINING METHOD**
FEUERLÖSCHSYSTEM UND FEHLERBESTIMMUNGSVERFAHREN
SYSTÈME D'EXTINCTION D'INCENDIE ET PROCÉDÉ DE DÉTERMINATION DE DÉFAILLANCE

(30) Priority: 23.07.2020 CN 202010716980
(43) Date of publication of application: 26.04.2023
(73) Proprietor: Huawei Technologies Co., Ltd., Longgang District, Shenzhen, Guangdong 518129 (CN)
(72) Inventor: GUO, Zhongtian, Shenzhen, Guangdong 518129 (CN)
(74) Representative: Pfenning, Meinig & Partner mbB
(86) International application number: PCT/CN2021/099892
(87) International publication number: WO 2022/017059

(56) References cited:
- CN-A- 107 402 107
- CN-A- 110 115 815
- CN-A- 110 327 566
- CN-A- 110 732 109
- CN-U- 204 864 673
- JP-A- H0 910 348

## Description

### TECHNICAL FIELD

This application relates to the field of firefighting technologies, and in particular, to a firefighting system and a fault confirmation method.

### BACKGROUND

In a data center, a power supply of a cabinet usually includes a mains supply and a battery. A plurality of batteries are usually deployed in one cabinet, and each battery includes one or more electrochemical cells. When an electrochemical cell inside a battery ruptures and is on fire, a firefighting device in the cabinet releases fire extinguishing to the battery in the cabinet to extinguish the fire. However, an extinguishing agent applied to the outside of the battery cannot be in direct contact with an electrochemical cell on fire, which results in a poor fire extinguishing effect. In addition, after a firefighting device fault (such as an extinguishing agent leakage) or a fire event of the battery occurs, operation and maintenance staff cannot learn of a fault cause and a fault location in a timely manner, and cannot perform maintenance in a timely manner. Therefore, how to provide a firefighting system that can improve fire extinguishing accuracy and operation and maintenance efficiency for a cabinet of a data center becomes an urgent problem to be solved.
CN 110 327 566 A discloses a fire-fighting apparatus. The fire-fighting apparatus is applied to an electric charging cabinet. The electric charging cabinet comprises a plurality of battery compartments. The fire-fighting apparatus comprises fire detectors, nozzles, a controller, a fire extinguisher, a solenoid valve and a pipeline system, wherein one fire detector and one nozzle are arranged in each battery compartment. An outlet of the fire extinguisher is connected with each nozzle through the pipeline system. The outlet of the fire extinguisher is connected with the solenoid valve through the pipeline system. The controller comprises a safety monitoring module and a fire-fighting action starting module, wherein the safety monitoring module is used for acquiring the detected results of the fire detectors, and judging whether to execute fire-fighting actions or not according to the detected results, and the fire-fighting action starting module is used for responding to the decision of executing the fire-fighting actions, and controlling the solenoid valve to be opened. By adopting the scheme of the fire-fighting apparatus, automatic fire fighting can be implemented, and the probability of occurrence of safety accidents is reduced.

### SUMMARY

The invention is defined by the independent claims. Preferable embodiments are defined by the dependent claims.
Embodiments disclose a firefighting system and a fault confirmation method, which can improve fire extinguishing accuracy and operation and maintenance efficiency of the firefighting system.

According to a first aspect, a firefighting system is provided, where the firefighting system includes a control module, at least one battery, and at least one firefighting module, and each firefighting module in the at least one firefighting module is connected to one or more batteries. A first firefighting module is configured to: when a temperature of a target battery connected to the first firefighting module is greater than or equal to a temperature threshold, release an extinguishing agent to the target battery, where the first firefighting module is any one of the at least one firefighting module. The control module is configured to: obtain a pressure value in the first firefighting module, and when the pressure value in the first firefighting module meets a preset condition, generate warning information, where the warning information indicates that the first firefighting module or the battery connected to the first firefighting module is faulty.

By collecting a pressure value in each firefighting module, the control module can determine whether the firefighting system is faulty based on the pressure value in each firefighting module, can determine a fault location of the firefighting system based on a location of a firefighting module whose pressure value meets a preset condition, and can provide fault location information to operation and maintenance staff to improve operation and maintenance efficiency when the firefighting system is faulty. In addition, when a battery temperature is greater than or equal to the temperature threshold, the extinguishing agent in the firefighting module can be released to the inside of the battery, thereby improving fire extinguishing accuracy.

When a reduction amount of a pressure value of the control module in the first firefighting module within preset duration is greater than or equal to a first change threshold, it indicates that the extinguishing agent in the first firefighting module is rapidly released. Therefore, the control module can determine that the battery connected to the first firefighting module is on fire, and the control module may generate first warning information, where the first warning information indicates that the battery connected to the first firefighting module is on fire.

According to the invention, when the reduction amount of the pressure value in the first firefighting module within the preset duration is less than the first change threshold and greater than a second change threshold, it indicates that the extinguishing agent in the first firefighting module is slowly released. Therefore, the control module determines that the extinguishing agent in the first firefighting module leaks, and generates second warning information, where the second warning information indicates that the extinguishing agent in the first firefighting module leaks.

The control module can determine, based on a change rate of the pressure value in the firefighting module, whether the extinguishing agent in the firefighting module leaks or the battery connected to the firefighting module in the firefighting system is on fire, and can notify the operation and maintenance staff of a specific fault cause when determining that the firefighting system is faulty and gives a warning, so that the operation and maintenance staff can perform maintenance based on the specific fault cause, which reduces time for operation and maintenance staff to troubleshoot, and improves operation and maintenance efficiency.

In another specific implementation, the firefighting system further includes a detection module, where the detection module is configured to: detect the pressure value in the first firefighting module, and send the pressure value in the first firefighting module to the control module.

In another specific implementation, each battery includes a housing, a fire extinguishing pipe, and at least one electrochemical cell. The fire extinguishing pipe and the at least one electrochemical cell are disposed inside the housing, the fire extinguishing pipe is fastened inside the housing, a first end of the fire extinguishing pipe is connected to the firefighting module, a second end thereof is closed, and the fire extinguishing pipe is filled with the extinguishing agent. The fire extinguishing pipe is configured to: when a temperature of the at least one electrochemical cell inside the battery is greater than or equal to a temperature threshold, release the extinguishing agent to the inside of the housing in which the fire extinguishing pipe is located.

The firefighting module is connected to the fire extinguishing pipe. The fire extinguishing pipe is disposed inside the battery. When a temperature of an electrochemical cell in the battery is greater than or equal to the temperature threshold, the extinguishing agent in the firefighting module can be released to the inside of the battery by using the fire extinguishing pipe, so as to implement accurate fire extinguishing on an electrochemical cell on fire in the battery, and improve fire extinguishing efficiency.

In another specific implementation, the fire extinguishing pipe is a fire detection tube.

When a temperature is greater than or equal to the temperature threshold, the fire detection tube can automatically rupture, and releases the extinguishing agent in the firefighting module to the inside of the battery, so as to implement accurate fire extinguishing on the electrochemical cell on fire in the battery. The fire detection tube is deployed inside the battery, deployment is simple, and replacement is simple after rupturing, so that deployment costs can be reduced.

In another specific implementation, one or more valves and one or more sensors are disposed on the fire extinguishing pipe. When any sensor in the one or more sensors detects that a temperature is greater than or equal to the temperature threshold, a part or all of the one or more valves in the fire extinguishing pipe are controlled to open, and the extinguishing agent is released to the inside of the housing in which the fire extinguishing pipe is located.

The temperature is detected by using the sensor, and when the temperature is greater than or equal to the temperature threshold, the valve on the fire extinguishing pipe is controlled to open to release the extinguishing agent, so as to implement accurate fire extinguishing on the electrochemical cell on fire in the battery, thereby improving fire extinguishing efficiency.

In another specific implementation, the firefighting system further includes a connection module, a first end of the connection module is connected to an interface of one firefighting module, a second end thereof is connected to the detection module, and a third end thereof is connected to the battery.

In another specific implementation, the firefighting system further includes a display module, configured to display a schematic diagram of distribution of cabinets in an equipment room, and display the warning information and the fault location when the firefighting system is faulty. By displaying a firefighting module or a battery that is faulty in the cabinet in the schematic diagram of distribution, the operation and maintenance staff can visually obtain the fault location and improve operation and maintenance efficiency.

According to a second aspect, a fault confirmation method is provided, where the method is used in the firefighting system according to the first aspect, the firefighting system includes at least one firefighting module, and the method includes:
A control module obtains a pressure value in a first firefighting module, where the first firefighting module is any one of the at least one firefighting module. When the pressure value in the first firefighting module meets a preset condition, the control module determines that the first firefighting module is faulty or a battery connected to the first firefighting module is faulty, and generates warning information.

When a reduction amount of a pressure value in the first firefighting module within preset duration is greater than or equal to a first change threshold, the control module determines that the battery connected to the first firefighting module is on fire, and generates first warning information, where the first warning information indicates that the battery connected to the first firefighting module is on fire.

In another specific implementation, when the reduction amount of the pressure value in the first firefighting module within the preset duration is less than the first change threshold and greater than a second change threshold, it is determined that an extinguishing agent in the first firefighting module leaks, and second warning information is generated, where the second warning information indicates that the extinguishing agent in the first firefighting module leaks.

According to a third aspect, a cabinet is provided, where the cabinet includes the firefighting system in the first aspect or any one of the possible implementations of the first aspect.

According to a fourth aspect, a fault confirmation apparatus is provided, including modules configured to perform the method in the second aspect or any one of the possible implementations of the second aspect.

According to a fifth aspect, a computing device is provided, including a processor and a memory, where the memory is configured to store instructions, the processor is configured to execute the instructions, and when the processor executes the instructions, an operation step of the method in the second aspect or any one of the possible implementations of the second aspect is performed.

This application may further combine the implementations provided in the foregoing aspects to provide more implementations.

### BRIEF DESCRIPTION OF DRAWINGS

FIG. 1 is a schematic diagram of a firefighting system according to an embodiment;
FIG. 2 is a schematic diagram of a structure of a battery according to an embodiment;
FIG. 3 is a schematic diagram of a structure of another firefighting system according to an embodiment;
FIG. 4 is a schematic diagram of deployment of a fire extinguishing pipe according to an embodiment;
FIG. 5 is a schematic diagram of a detection module according to an embodiment;
FIG. 6 is a schematic diagram of a connection module according to an embodiment;
FIG. 7 is a schematic diagram of another firefighting system according to an embodiment;
FIG. 8A and FIG. 8B are a schematic diagram of a monitoring interface according to an embodiment;
FIG. 9A and FIG. 9B are a schematic diagram of another monitoring interface according to an embodiment;
FIG. 10 is a schematic flowchart of a fault confirmation method according to an embodiment;
FIG. 11 is a schematic diagram of a fault confirmation apparatus according to an embodiment; and
FIG. 12 is a schematic diagram of a structure of a computing device according to an embodiment.

### DESCRIPTION OF EMBODIMENTS

The following describes in detail a firefighting system and a firefighting method provided in embodiments with reference to accompanying drawings.

In the embodiments, the firefighting system may be applied to a battery cabinet in which a battery is deployed, or may be applied to a cabinet in which a battery and another type of device are deployed. The another type of device may be a storage device (for example, a storage array), a network device (for example, a switch or a server), or the like. For ease of description, in this embodiment, an example in which a firefighting system is applied to a battery cabinet is used for description.

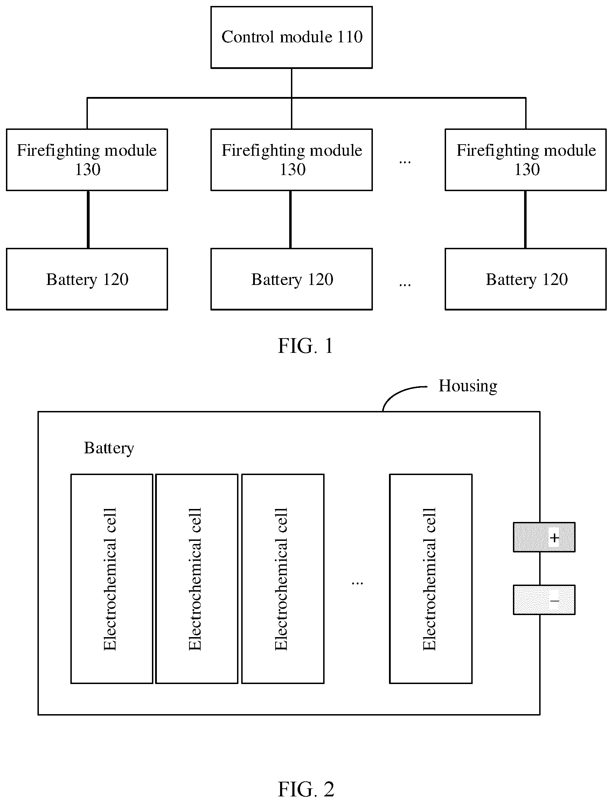

FIG. 1 is a schematic diagram of a firefighting system according to an embodiment. The firefighting system includes a control module 110, one or more batteries 120, and one or more firefighting modules 130. The firefighting module 130 is connected to the battery by using a connection pipe. Each firefighting module 130 may be connected to one battery by using a connection pipe, or may be connected to a plurality of batteries. In FIG. 1, a connection between one firefighting module 130 and one battery 120 is used as an example, and each firefighting module 130 is filled with an extinguishing agent. As shown in FIG. 2, the battery 120 includes a housing and one or more electrochemical cells located in the housing. When an electrochemical cell in the battery 120 is on fire, the extinguishing agent in the firefighting module 130 can be released to the inside of the housing of the battery 120 by using the connection pipe to perform fire extinguishing on the electrochemical cell on fire. The control module 110 is connected to each firefighting module 130, can obtain a pressure value in each firefighting module 130, determines, based on a change of the pressure value in the firefighting module 130, whether the battery 120 is on fire or whether the extinguishing agent in the firefighting module 130 leaks, and generates warning information to notify operation and maintenance staff to perform maintenance when the battery 120 is on fire or the extinguishing agent in the firefighting module 130 leaks.

Specifically, the control module 110 determines, based on a reduction amount of the pressure value of the firefighting module 130 within preset duration, whether the battery 120 is on fire or the extinguishing agent of the firefighting module 130 leaks. If a reduction amount of a pressure value in a firefighting module 130 within the preset duration is greater than or equal to a first change threshold, it is determined that a battery 120 connected to the firefighting module 130 is on fire. If a reduction amount of a pressure value of the firefighting module 130 within the preset duration is less than the first change threshold and greater than a second change threshold, it is determined that an extinguishing agent in the firefighting module 130 leaks. The reduction amount is a difference between a first pressure value and a second pressure value within the preset duration, a sampling time point of the first pressure value is before a sampling time point of the second pressure value, the first change threshold is greater than the second change threshold, and both the first change threshold and the second change threshold are greater than zero. The extinguishing agent in the firefighting module may be a substance that has a fire extinguishing effect, such as heptafluoropropane or perfluorohexanone, which is not specifically limited in this embodiment.

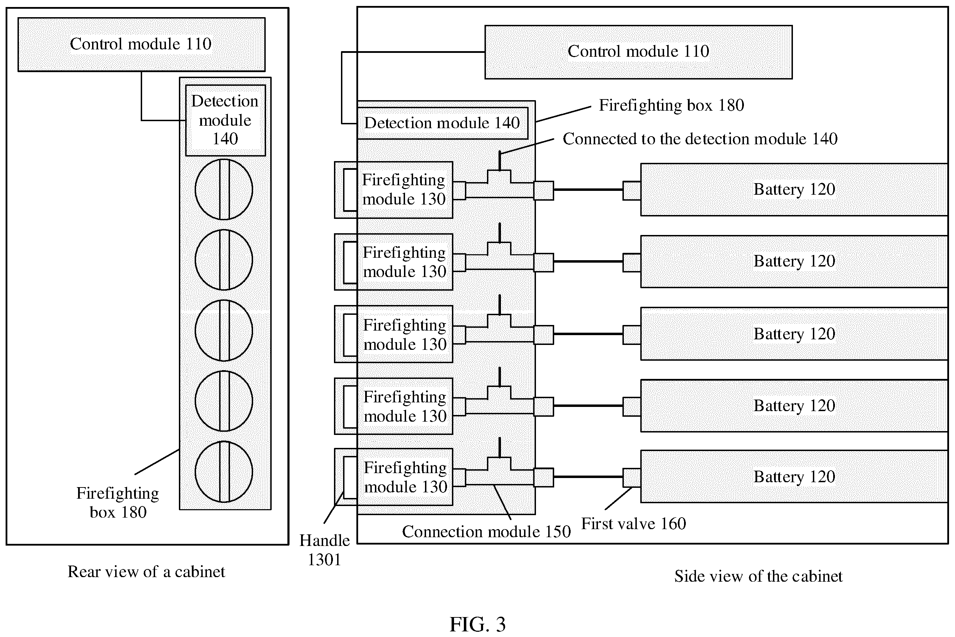

FIG. 3 is a schematic diagram of a structure of another firefighting system according to an embodiment. The firefighting system further includes a detection module 140, a connection module 150, and a first valve 160. An interface of each firefighting module 130 is connected to a first end of one connection module 150, a second end of each connection module 150 is connected to the detection module 140 by using a connection pipe, a third end of each connection module 150 is connected to a first end of the first valve 160 by using a connection pipe, and the first valve 160 penetrates through and is embedded in the housing of the battery 120, so that a second end of the first valve 160 is located inside the housing of the battery 120. The detection module 140 is connected to the control module 110, and the detection module 140 is configured to: detect the pressure value in each firefighting module 130, and send a detected pressure value to the control module 110, so that the control module 110 can determine, based on the obtained pressure value and the foregoing method, whether a battery 120 is on fire or whether an extinguishing agent in a firefighting module 130 leaks.

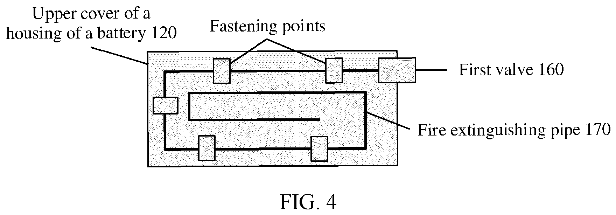

In a specific implementation, the firefighting system further includes a fire extinguishing pipe 170, where the fire extinguishing pipe 170 is fastened inside the housing, a first end of the fire extinguishing pipe 170 is closed, and a second end thereof is connected to the second end of the first valve 160, so that the extinguishing agent in the firefighting module 130 flows into the fire extinguishing pipe 170 by using the connection pipe. FIG. 4 is a schematic diagram of deployment of a fire extinguishing pipe on an inside of a housing according to an embodiment. The fire extinguishing pipe 170 may be disposed along one side of the inside of the housing. Specifically, the fire extinguishing pipe 170 may be on an inside of an upper cover of the housing. The fire extinguishing pipe 140 may be a fire detection tube, and the fire detection tube is a pipe made of a heat sensitive material. When a local temperature of a point of the fire detection tube is greater than or equal to a temperature threshold, a rupture may occur, and an extinguishing agent in the tube is released from the point. When a local temperature of a fire detection tube that is close to a fire point is greater than or equal to the temperature threshold because an electrochemical cell in a battery housing is on fire, the fire detection tube that is close to the fire point may rupture, an extinguishing agent in the fire detection tube is released to perform fire extinguishing on a fire point of the electrochemical cell, so that accurate fire extinguishing on the fire point of the electrochemical cell inside the battery can be simply implemented. It should be noted that a deployment manner of the fire extinguishing pipe 170 in FIG. 4 is merely an example. The fire extinguishing pipe 170 may alternatively be deployed in another deployment manner. For example, there is a gap between a housing of the battery 120 except a bottom housing and an electrochemical cell, and the fire extinguishing pipe 170 may alternatively be deployed on another housing different from the bottom housing, so as to increase a length of the fire extinguishing pipe 170, so that an area of the fire extinguishing pipe 170 for sensing a temperature is increased. When the battery 120 is on fire, the fire can be quickly sensed, and then fire extinguishing is performed.

The control module 110 determines, based on a pressure value in each firefighting module 130 reported by the detection module 140, whether a battery 120 is on fire or whether an extinguishing agent in the firefighting module 130 leaks. After determining that a battery 120 is on fire or that an extinguishing agent in a firefighting module 130 leaks, the control module 110 can generate warning information, and the warning information includes a fault cause and a fault location. The fault cause includes that a battery 120 is on fire or a firefighting module 130 leaks. The fault location indicates a location of the battery 120 on fire or a location of the firefighting module 130 whose extinguishing agent leaks, for example, a number of the battery on fire or a number of the firefighting module 130 that leaks. After obtaining the warning information, the operation and maintenance staff can quickly determine the fault cause and the fault location, and then use a corresponding processing manner. For example, after the battery is on fire, an electrochemical cell on fire is replaced, a fire detection tube in the housing of the battery on fire is replaced, and a firefighting module 130 connected to the battery on fire is replaced. It should be noted that, the foregoing one side housing used to fasten the fire extinguishing pipe 140 can be removed from the housing, so that the operation and maintenance staff can replace the fire extinguishing pipe 140.

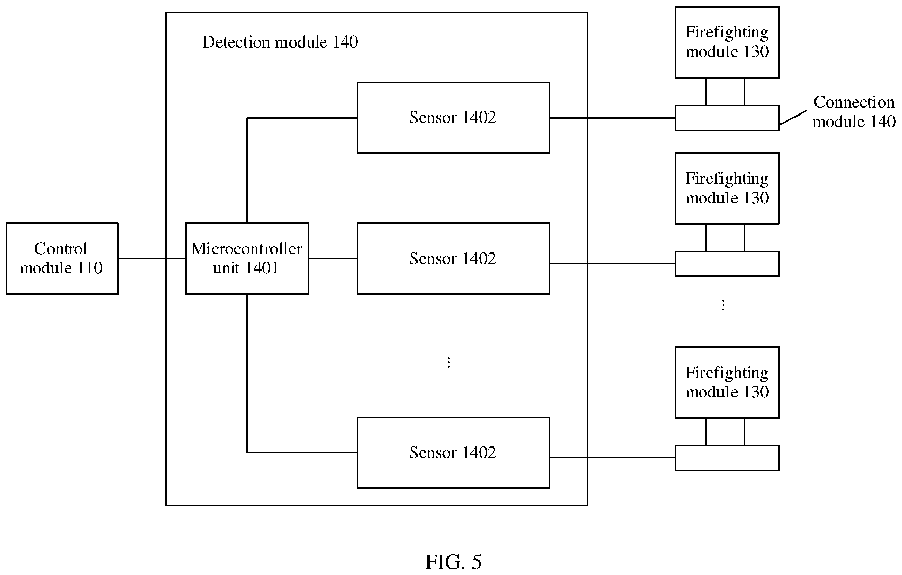

Optionally, the detection module 140 includes one or more sensors 1402 of a microcontroller unit 1401 (microcontroller unit, MCU). FIG. 5 is a schematic diagram of a detection module according to an embodiment. A quantity of sensors is the same as a quantity of firefighting modules 130, each sensor is connected to the second end of the connection module 150 by using a connection pipe, and each sensor is further connected to the MCU 1401. The sensor 1402 is configured to periodically sample the pressure value in the firefighting module 130, and the MCU 1401 is configured to obtain the pressure value of the firefighting module 130 obtained by sampling by the sensor 1402, and send the pressure value to the control module 110. Optionally, in a specific implementation process, a quantity ratio of the sensor 1402 to the firefighting module 130 may be adjusted based on a service requirement. For example, the quantity of the sensors 1402 may be different from the quantity of the firefighting modules 130. In this case, a plurality of firefighting modules 130 may share a sensor.

Optionally, the fire extinguishing pipe 170 may not be made of a heat sensitive material, for example, a metal pipe is used. A plurality of valves and a plurality of temperature sensors are disposed on the fire extinguishing pipe 170. When a temperature value detected by a temperature sensor is greater than or equal to the temperature threshold, a trigger signal is generated, so that one or more valves closer to the temperature sensor are opened, to release an extinguishing agent in the fire extinguishing pipe 170 to the electrochemical cell to complete fire extinguishing.

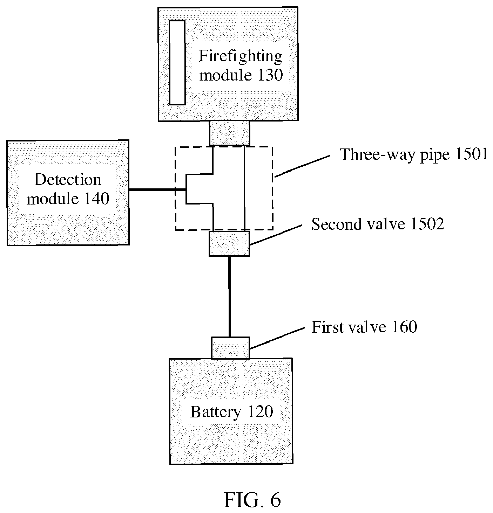

Optionally, the connection module 150 may be a T-type three-way valve, or may be a structure including a three-way pipe 1501 and a second valve 1502. When the connection module 150 is the structure including the three-way pipe 1501 and the second valve 1502, as shown in FIG. 6, a first end of the three-way pipe 1501 is connected to the interface of the firefighting module 130, a second end thereof is connected to the detection module 140 by using a connection pipe, a third end thereof is connected to a first end of the second valve 1502, and a second end of the second valve 1502 is connected to the first end of the first valve 160 by using a connection pipe. The following describes an open/closed state of the first valve 160 and the second valve 1502 by using an example in which the connection module 150 includes the three-way pipe 1501 and the second valve 1502.

When the battery works normally, both the first valve 160 and the second valve 1502 are in an open state, so that the firefighting module 130, the detection module 140, and the fire extinguishing pipe 170 are connected to each other, the extinguishing agent in the firefighting module 130 can flow into the fire extinguishing pipe 170, and the sensor in the detection module 140 can accurately obtain the pressure value in the firefighting module 130.

The control module 110 determines, based on the pressure value in the firefighting module 130 reported by the detection module 140, that an extinguishing agent in a firefighting module 130 leaks. When replacing the firefighting module 130, the operation and maintenance staff may close the second valve 1502 on the connection module 150 connected to the firefighting module 130, so as to prevent the extinguishing agent in the fire extinguishing pipe 170 from leaking when the firefighting module 130 is removed. It may be understood that the second valve 1502 can also be automatically closed when the second valve 1502 is separated from the firefighting module 130, and automatically opened when the second valve 1502 is connected to the firefighting module 120.

When the control module 110 determines, based on the pressure value in the firefighting module 130 reported by the detection module 140, that an electrochemical cell in a battery 120 is on fire, the operation and maintenance staff need to replace the battery 120 on fire. One end of the connection pipe connected to the first valve 160 has a valve structure, and the valve structure enables automatic closing when separated from the first valve 160. When the operation and maintenance staff take out the battery 120 on fire from the cabinet, the valve structure can be closed automatically to prevent the extinguishing agent in the firefighting module 130 from leaking out through the connection pipe.

Optionally, the firefighting system further includes a firefighting box 180. As shown in FIG. 3, the firefighting box 180 is configured to install the firefighting module 130, the detection module 140, and the connection module 150. As shown in FIG. 6, the firefighting box 180 includes one or more slots, configured to insert and fasten the firefighting module 130, and a tail end of each slot is docked with one end of the connection module 150. When an extinguishing agent in a firefighting module 130 causes a pressure to be lower than a pressure threshold due to fire extinguishing or an extinguishing agent leakage, the operation and maintenance staff may remove the firefighting module 130 from the firefighting box. For example, as shown in FIG. 3, each firefighting module 130 has a handle 1301, and the operation and maintenance staff may remove the firefighting module from the slot by using the handle 1301. Then, a new firefighting module 130 filled with the extinguishing agent is inserted into a vacant slot. It may be understood that an interface part of the firefighting module 130 can be automatically closed when the firefighting module 130 is separated from the connection module 150, so as to prevent the extinguishing agent in the firefighting module 130 from leaking. The firefighting box in the cabinet may be deployed at the rear of the cabinet, or may be deployed at another location of the cabinet, which is not specifically limited in this embodiment.

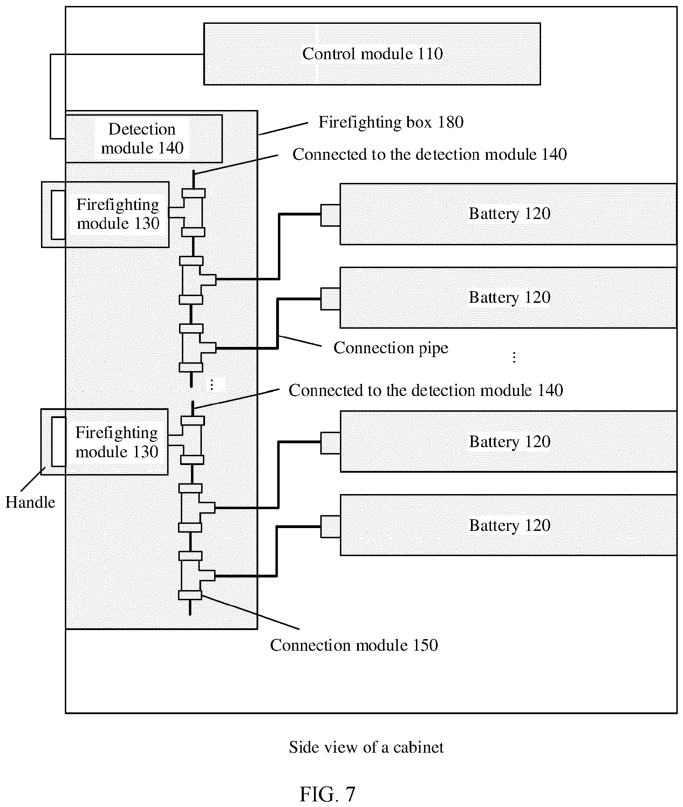

FIG. 7 is a schematic diagram of a structure of another firefighting system according to an embodiment. In this firefighting system, one firefighting module 130 is connected to a plurality of batteries 120 by using a plurality of connection modules 150, which can perform fire extinguishing on the plurality of batteries 120. It may be understood that when one firefighting module 130 is connected to a plurality of batteries 120, when the control module 110 determines, based on the pressure value in each firefighting module 130 reported by the detection module 140, that a reduction amount of a pressure value in a firefighting module 130 within the preset duration is greater than the first change threshold, the control module 130 can only determine that a battery is on fire in a plurality of batteries 120 connected to the firefighting module 130, but cannot determine an electrochemical cell in which battery 120 is on fire.

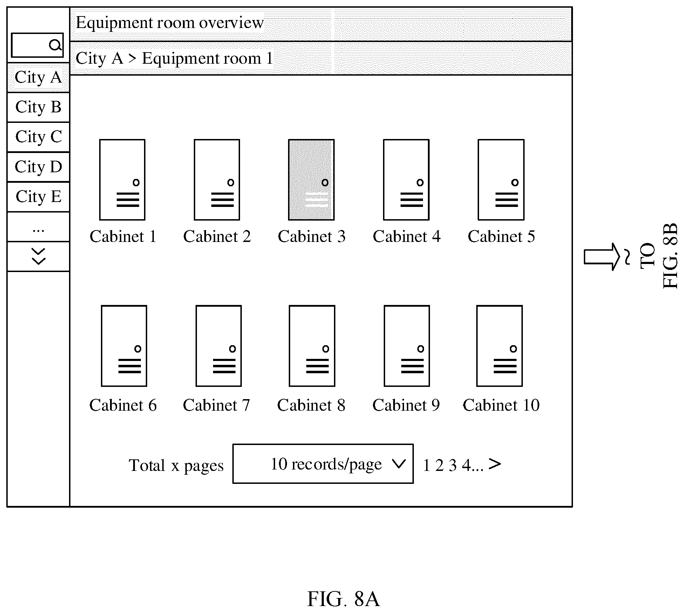

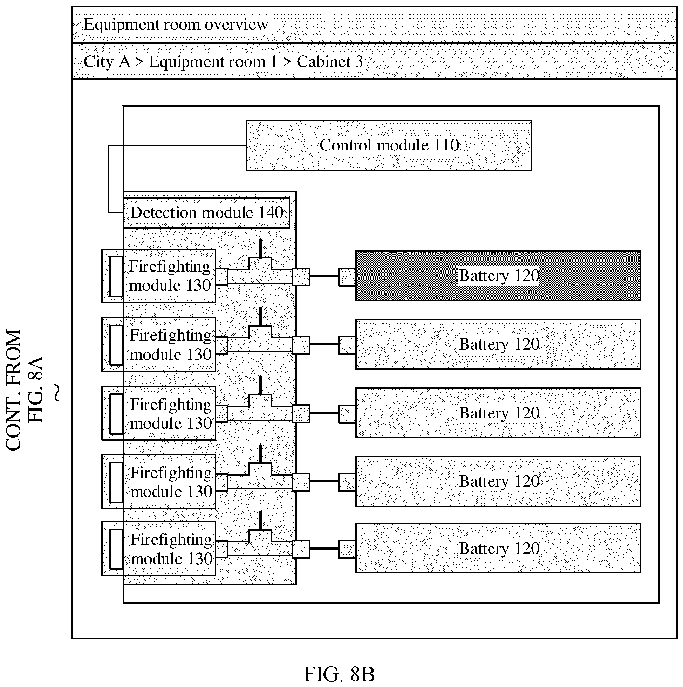

In a possible implementation, the firefighting system further includes a display module 190, configured to display a monitoring interface, and display warning information when the control module 110 generates the warning information. FIG. 8A and FIG. 8B are a schematic diagram of a monitoring interface according to an embodiment. A schematic diagram of distribution of cabinets in an equipment room is displayed on the monitoring interface. A correspondence among a cabinet, a firefighting module, and a battery is stored in the control module 110. When the control module 110 determines that an abnormality occurs on a cabinet (for example, a battery 120 is on fire or an extinguishing agent leakage occurs on a firefighting module 130), the control module 110 displays, on the monitoring interface, a city in which an abnormal cabinet is located, an equipment room number, and a schematic diagram of distribution of cabinets in an equipment room, so that the abnormal cabinet can be highlighted. For example, correspondingly, an icon of the abnormal cabinet blinks on a display interface, or the abnormal cabinet is displayed in a different color from a normal cabinet. Warning information is also displayed on the monitoring interface, for example, "A battery in cabinet 3 is on fire. Click to view details". At the same time, the control module 110 reminds the operation and maintenance staff of the abnormality in the cabinet by using an email, an SMS message, or a prompt tone.

After learning that a cabinet is abnormal, the operation and maintenance staff may click an icon corresponding to the abnormal cabinet, and the monitoring interface displays a schematic diagram of distribution of a firefighting module 130 and a battery 120 inside the cabinet, and highlights an abnormal battery 120 and/or firefighting module 130. FIG. 8A and FIG. 8B show that the uppermost battery 120 in cabinet 3 is on fire. The operation and maintenance staff can determine locations of a faulty battery 120 and/or firefighting module 130 based on highlighted locations. It should be noted that the monitoring interface may display a distribution diagram of cabinets in an equipment room and a distribution diagram of a battery and a firefighting module inside a cabinet by using a two-dimensional image or a three-dimensional image. In FIG. 8A and FIG. 8B, two-dimensional display is used as an example.

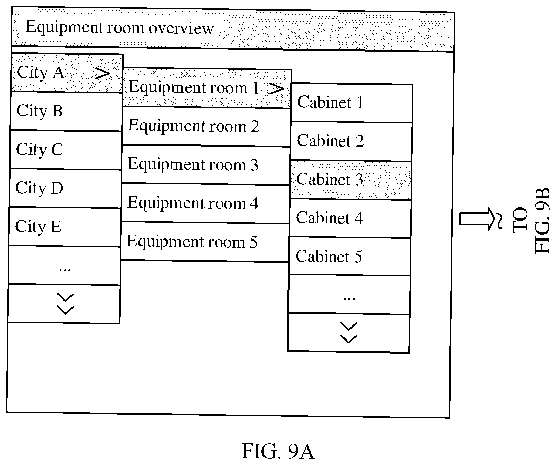

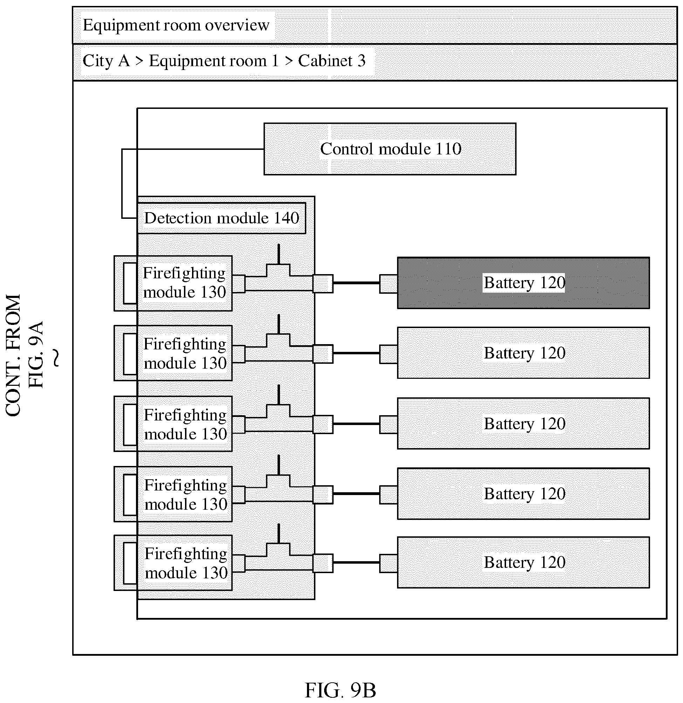

FIG. 9A and FIG. 9B are a schematic diagram of another monitoring interface according to an embodiment. The monitoring interface includes a navigation bar, and the navigation bar includes navigation lists such as city, equipment room number, equipment room, firefighting module, and battery. When the control module 110 determines that a cabinet is abnormal, the control module 110 displays warning information on the monitoring interface, for example, "A battery in cabinet 3 in equipment room 1 in city A is on fire. Click to view details". At the same time, the control module 110 reminds the operation and maintenance staff of the abnormality in the cabinet by using an email, an SMS message, or a prompt tone. As shown in FIG. 9A and FIG. 9B, after learning that the cabinet is abnormal, the operation and maintenance staff can view locations of the abnormal battery 120 and/or firefighting module 130 by using the navigation lists. It may be understood that the foregoing monitoring interfaces shown in FIG. 8A and FIG. 8B and FIG. 9A and FIG. 9B are merely examples. The monitoring interface may alternatively have another interface display manner. Another reasonable display interface that a person skilled in the art can think of based on the foregoing content also falls within the protection scope of the present invention.

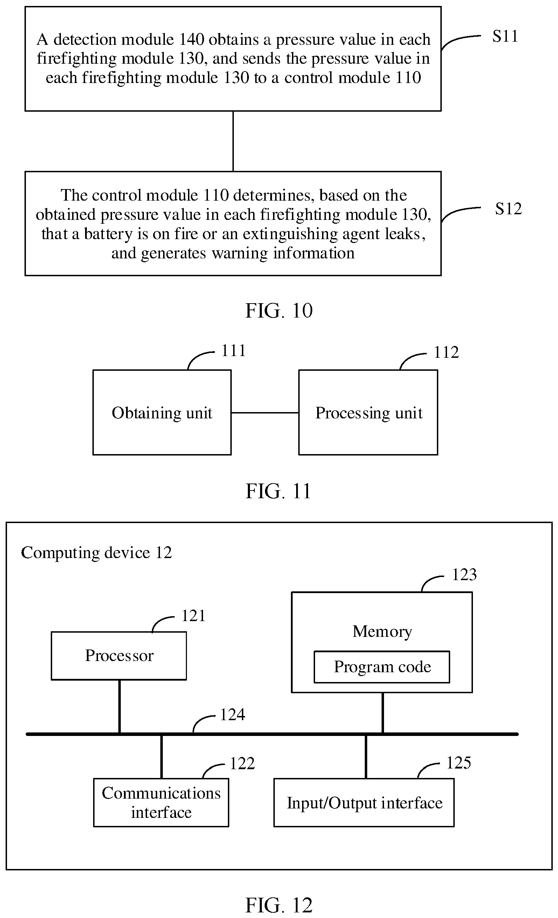

The foregoing describes the firefighting system provided in this embodiment in detail with reference to FIG. 1 to FIG. 9A and FIG. 9B. The following describes a firefighting method provided in an embodiment with reference to the foregoing firefighting system. FIG. 10 is a schematic flowchart of a firefighting system fault confirmation method according to an embodiment. The method includes steps S11 and S12.

S11: A detection module 140 obtains a pressure value in each firefighting module 130, and sends the pressure value in each firefighting module 130 to a control module 110.

As shown in FIG. 5, the detection module 140 includes an MCU and a plurality of sensors. Each sensor periodically samples a pressure value in a firefighting module 130 connected to the sensor. The MCU obtains, from each sensor, a pressure value obtained by sampling by the sensor, and sends the pressure value corresponding to each firefighting module 130 to the control module 110.

S12: The control module 110 determines, based on the obtained pressure value in each firefighting module 130, that a battery is on fire or an extinguishing agent leaks, and generates warning information.

For a method in which the control module 110 determines, based on the pressure value in each firefighting module 130, whether a battery 120 is on fire or whether an extinguishing agent in a firefighting module 130 leaks, refer to related descriptions in the foregoing system embodiment, and details are not described herein again. When it is determined that a battery 120 is on fire or an extinguishing agent in a firefighting module 130 leaks, warning information is generated, where the warning information includes a fault cause and a fault location. The fault cause includes that a battery 120 is on fire or a firefighting module 130 leaks. The fault location indicates a location of the battery 120 on fire or a location of the firefighting module 130 whose extinguishing agent leaks, for example, a number of the battery on fire or a number of the firefighting module 130 that leaks.

It may be understood that, regardless of whether the control module 110 determines that a battery 120 is on fire or that an extinguishing agent in a firefighting module 130 leaks, the detection module 140 continues to obtain the pressure value in each firefighting module 130, and reports the obtained pressure value to the control module 110. The control module 110 also continues to determine, based on the pressure value reported by the detection module, whether a battery 120 is on fire or whether an extinguishing agent in a firefighting module 130 leaks.

Optionally, after obtaining a pressure value obtained by sampling by each sensor 1402, an MCU 1401 in the detection module 140 may determine, based on the pressure value in each firefighting module 130, whether a reduction amount of the pressure value in each firefighting module 130 within preset duration is greater than or equal to a first change threshold. If a reduction amount of a pressure value in a firefighting module 130 within the preset duration is greater than or equal to the first change threshold, the MCU 1401 sends first indication information to the control module 110, where the first indication information indicates that a reduction amount of a pressure value in a firefighting module 130 within the preset duration is greater than the first change threshold. After receiving the first indication information, the control module 110 determines that an electrochemical cell in a battery 120 connected to the firefighting module 130 is on fire, and generates first warning information. If a reduction amount of a pressure value in a firefighting module 130 within the preset duration is less than the first change threshold and greater than a second change threshold, the MCU 1401 sends second indication information to the control module 110, where the second indication information indicates that a reduction amount of a pressure value in a firefighting module 130 within the preset duration is less than the first change threshold and greater than the second change threshold. After receiving the first indication information, the control module 110 determines that an extinguishing agent in the firefighting module 130 leaks, and generates second warning information. If determining that a reduction amount of a pressure value in each firefighting module 130 within the preset duration is less than or equal to the second change threshold, the MCU does not send information to the control module 110.

It should be noted that, for brief description, the foregoing method embodiment is described as a series of action combinations. However, a person skilled in the art should know that the present invention is not limited to the described action sequence. In addition, a person skilled in the art should also know that embodiments described in the specification are all preferred embodiments, and involved actions are not necessarily required by the present invention.

Another reasonable combination of steps that can be figured out by a person skilled in the art based on the foregoing descriptions also falls within the protection scope of the present invention. In addition, a person skilled in the art should also know that all embodiments described in the specification are preferred embodiments, and the related actions are not necessarily mandatory to the present invention.

The foregoing describes in detail the firefighting system and the fault confirmation method according to the embodiments with reference to FIG. 1 to FIG. 10. With reference to FIG. 11 and FIG. 12, the following describes a fault confirmation apparatus and device according to an embodiment.

FIG. 11 is a schematic diagram of a fault confirmation apparatus according to an embodiment. The apparatus is applied to the firefighting system shown in FIG. 3, and is configured to complete an operation performed by the control module 110. The fault confirmation apparatus 11 includes an obtaining unit 111 and a processing unit 112.

The obtaining unit 111 is configured to obtain a pressure value in a first firefighting module 130 detected by a detection module 140, where the first firefighting module 130 is any firefighting module in the firefighting system.

The processing unit 112 is configured to generate warning information when the pressure value in the first firefighting module 130 meets a preset condition, where the warning information indicates that the firefighting system is faulty. Specifically, when a reduction amount of the pressure value in the first firefighting module 130 within preset duration is greater than or equal to a first change threshold, the processing unit 112 generates first warning information, where the first warning information indicates that a battery connected to the first firefighting module 130 is on fire. When the reduction amount of the pressure value in the first firefighting module 130 within the preset duration is less than the first change threshold and greater than a second change threshold, second warning information is generated, and the second warning information indicates that an extinguishing agent in the first firefighting module 130 leaks.

Specifically, for an operation performed by the fault confirmation apparatus 11, refer to a related operation performed by the control module 110 in the foregoing method embodiment, or a related operation performed by the control module 110 in the foregoing firefighting system. Details are not described herein again.

It should be understood that the fault confirmation apparatus 11 in this embodiment may be implemented by using an application-specific integrated circuit (application-specific integrated circuit, ASIC) or a programmable logic device (programmable logic device, PLD). The PLD may be a complex programmable logical device (complex programmable logical device, CPLD), a field-programmable gate array (field-programmable gate array, FPGA), a generic array logic (generic array logic, GAL), or any combination thereof. When the fault confirmation method shown in FIG. 10 is implemented by using software, the fault confirmation apparatus 11 and each module of the fault confirmation apparatus 11 may alternatively be software modules.

FIG. 12 is a schematic diagram of a structure of a computing device according to an embodiment. The computing device 12 includes a processor 121, a communications interface 122, and a memory 123. The processor 121, the communications interface 122, and the memory 123 are connected to each other by using a bus 124. The memory 123 stores program code, and the processor 121 may invoke the program code stored in the memory 122 to perform the following operations:
obtaining a pressure value in a first firefighting module, and when the pressure value in the first firefighting module meets a preset condition, determining that the first firefighting module is faulty or a battery connected to the first firefighting module is faulty, and generating warning information. For the performed operations, refer to related operations performed by the control module 110 in the foregoing method embodiment, or related operations performed by the control module 110 in the foregoing firefighting system. Details are not described herein again.

It should be understood that in this embodiment, the processor 121 may have a plurality of specific implementations. For example, the processor 121 may be a central processing unit (central processing unit, CPU) or a graphics processing unit (graphics processing unit, GPU), and the processor 121 may alternatively be a single-core processor or a multi-core processor. The processor 121 may be combined by using a CPU and a hardware chip. The hardware chip may be an ASIC, a PLD, or a combination thereof. The PLD may be a complex programmable logic device (CPLD), a field-programmable gate array (FPGA), a generic array logic (GAL), or any combination thereof. The processor 121 may alternatively be implemented separately with a logic device that has built-in processing logic, such as an FPGA or a digital signal processor (digital signal processor, DSP).

The communications interface 122 may be a wired interface or a wireless interface, and is configured to communicate with another module or device. The wired interface may be an Ethernet interface, a controller area network (controller area network, CAN) interface, or a local interconnect network (local interconnect network, LIN) interface. The wireless interface may be a cellular network interface, an interface which uses a wireless local area network, or the like. For example, the communications interface 122 in this embodiment may be specifically configured to obtain a pressure value in each firefighting module.

The memory 123 may be a nonvolatile memory, for example, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The memory 123 may alternatively be a volatile memory, and the volatile memory may be a random access memory (random access memory, RAM).

The memory 123 may be configured to store instructions and data, so that the processor 121 invokes the instructions stored in the memory 123 to implement the operation performed by the processing unit 112, for example, the operation performed by the control module 110 in the foregoing method embodiment. In addition, the computing device 12 may include more or fewer components than those shown in FIG. 10, or may have different component configuration manners.

The bus 124 may be an internal bus that implements interconnection between systems or devices. The bus 124 may be classified into an address bus, a data bus, a control bus, and the like. For ease of representation, only one thick line is for representing the bus in FIG. 10, but this does not mean that there is only one bus or only one type of bus.

Optionally, the computing device 12 may further include an input/output interface 125, and the input/output interface 125 is connected to an input/output device, configured to receive input information and output a warning.

It should be understood that the computing device 12 in this embodiment may be corresponding to the fault confirmation apparatus 11 in the embodiment, and may correspondingly perform the operation performed by the control module 110 in the foregoing method embodiment. Details are not described herein.

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions. When the computer program instructions are loaded and executed on the computer, the procedure or functions according to embodiments are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium, or a semiconductor medium. The semiconductor medium may be a solid state drive (solid state drive, SSD).

The foregoing descriptions are merely specific implementations of this application. Any variation or replacement readily figured out by a person skilled in the art based on the specific implementations provided in this application shall fall within the protection scope of the claims.

## Claims

1. A firefighting system, wherein the firefighting system comprises a control module (110), at least one battery (120), and at least one firefighting module (130), and each firefighting module (130) in the at least one firefighting module (130) is connected to one or more batteries (120);
a first firefighting module (130) is configured to be filled with an extinguishing agent and to: when a temperature of a target battery (120) connected to the first firefighting module (130) is greater than or equal to a temperature threshold, release the extinguishing agent to the target battery (120), wherein the first firefighting module (130) is any one of the at least one firefighting module (130); and
the control module (110) is configured to: obtain an internal pressure value in the first firefighting module (130), and when the pressure value in the first firefighting module (130) meets a preset condition, generate warning information, wherein the warning information indicates that the firefighting system is faulty, wherein the warning information includes first warning information and second warning information;
wherein the control module (110) is further configured to generate the first warning information when a reduction amount of the pressure value in the first firefighting module (130) within preset duration is greater than or equal to a first change threshold, wherein the first warning information indicates that the battery (120) connected to the first firefighting module (130) is on fire,
wherein the control module (110) is further configured to generate the second warning information when the reduction amount of the pressure value in the first firefighting module (130) within the preset duration is less than the first change threshold and greater than a second change threshold, wherein the second warning information indicates that an extinguishing agent in the first firefighting module (130) leaks.

2. The firefighting system according to claim 1, wherein the firefighting system further comprises a detection module; and
the detection module is configured to: detect the pressure value in the first firefighting module (130), and send the pressure value in the first firefighting module (130) to the control module (110).

3. The firefighting system according to claim 1 or 2, wherein each of the at least one battery (120) comprises a housing, a fire extinguishing pipe, and at least one electrochemical cell, the fire extinguishing pipe and the at least one electrochemical cell are disposed inside the housing, the fire extinguishing pipe is fastened inside the housing, a first end of the fire extinguishing pipe is connected to the firefighting module (130), a second end thereof is closed, and the fire extinguishing pipe is filled with the extinguishing agent; and
the fire extinguishing pipe is configured to: when a temperature of the at least one electrochemical cell is greater than or equal to a temperature threshold, release the extinguishing agent to the inside of the housing in which the fire extinguishing pipe is located.

4. The firefighting system according to claim 3, wherein the fire extinguishing pipe is a fire detection tube.

5. The firefighting system according to claim 3, wherein one or more valves and one or more sensors are disposed on the fire extinguishing pipe; and when any sensor in the one or more sensors detects that a temperature is greater than or equal to the temperature threshold, a part or all of the one or more valves in the fire extinguishing pipe are controlled to open, and the extinguishing agent is released to the inside of the housing in which the fire extinguishing pipe is located.

6. The firefighting system according to claim 2, wherein the firefighting system further comprises a connection module, a first end of the connection module is connected to an interface of one firefighting module (130), a second end thereof is connected to the detection module, and a third end thereof is connected to the battery (120).

7. The firefighting system according to any one of claims 1 to 6, wherein the firefighting system further comprises a display module, and the display module is configured to display a schematic diagram of distribution of cabinets in an equipment room, and display the warning information and a fault location when the firefighting system is faulty.

8. A fault confirmation method, wherein the method is used in the firefighting system according to any one of claims 1 to 7, the firefighting system comprises at least one firefighting module (130) configured to be filled with an extinguishing agent, and the method comprises:
obtaining (S11) an internal pressure value in a first firefighting module (130), wherein the first firefighting module (130) is any one of the at least one firefighting module (130); and
generating (S12) warning information when the pressure value in the first firefighting module (130) meets a preset condition, wherein the warning information indicates that the firefighting system is faulty, wherein the warning information includes first warning information and second warning information;
wherein the generating warning information when the pressure value in the first firefighting module (130) meets a preset condition comprises:
generating (S12) the first warning information when a reduction amount of the pressure value in the first firefighting module (130) within preset duration is greater **than** or equal to a first change threshold, wherein the first warning information indicates that a battery (120) connected to the first firefighting module (130) is on fire; and generating the second warning information when the reduction amount of the pressure value in the first firefighting module (130) within the preset duration is less than the first change threshold and greater **than** a second change threshold, wherein the second warning information indicates that an extinguishing agent in the first firefighting module (130) leaks.

## Patentansprüche

1. Brandbekämpfungssystem, wobei das Brandbekämpfungssystem ein Steuermodul (110), mindestens eine Batterie (120) und mindestens ein Brandbekämpfungsmodul (130) umfasst, und jedes Brandbekämpfungsmodul (130) in dem mindestens einen Brandbekämpfungsmodul (130) mit einer oder mehreren Batterien (120) verbunden ist; ein erstes Brandbekämpfungsmodul (130) konfiguriert ist, um mit einem Löschmittel gefüllt zu werden und: wenn eine Temperatur einer Zielbatterie (120), die mit dem ersten Brandbekämpfungsmodul (130) verbunden ist, größer als oder gleich einer Temperaturschwelle ist, das Löschmittel an die Zielbatterie (120) abzugeben, wobei das erste Brandbekämpfungsmodul (130) ein beliebiges des mindestens einen Brandbekämpfungsmoduls (130) ist; und
das Steuermodul (110) konfiguriert ist zum: Erhalten eines Innendruckwerts in dem ersten Brandbekämpfungsmodul (130), und wenn der Druckwert in dem ersten Brandbekämpfungsmodul (130) eine voreingestellte Bedingung erfüllt, Erzeugen von Warninformationen, wobei die Warninformationen angeben, dass das Brandbekämpfungssystem fehlerhaft ist, wobei die Warninformationen erste Warninformationen und zweite Warninformationen einschließen;
wobei das Steuermodul (110) ferner konfiguriert ist, um die ersten Warninformationen zu erzeugen, wenn ein Verringerungsbetrag des Druckwerts in dem ersten Brandbekämpfungsmodul (130) innerhalb einer voreingestellten Dauer größer als oder gleich einer ersten Änderungsschwelle ist, wobei die ersten Warninformationen angeben, dass die Batterie (120), die mit dem ersten Brandbekämpfungsmodul (130) verbunden ist, brennt,
wobei das Steuermodul (110) ferner konfiguriert ist, um die zweiten Warninformationen zu erzeugen, wenn der Verringerungsbetrag des Druckwerts in dem ersten Brandbekämpfungsmodul (130) innerhalb der voreingestellten Dauer geringer als die erste Änderungsschwelle und größer als eine zweite Änderungsschwelle ist, wobei die zweiten Warninformationen angeben, dass ein Löschmittel in dem ersten Brandbekämpfungsmodul (130) austritt.

2. Brandbekämpfungssystem nach Anspruch 1, wobei das Brandbekämpfungssystem ferner ein Erkennungsmodul umfasst; und
das Erkennungsmodul konfiguriert ist zum: Erkennen des Druckwerts in dem ersten Brandbekämpfungsmodul (130) und Senden des Druckwerts in dem ersten Brandbekämpfungsmodul (130) an das Steuermodul (110).

3. Brandbekämpfungssystem nach Anspruch 1 oder 2, wobei jede der mindestens einen Batterie (120) ein Gehäuse, ein Feuerlöschrohr und mindestens eine elektrochemische Zelle umfasst, das Feuerlöschrohr und die mindestens eine elektrochemische Zelle innerhalb des Gehäuses angeordnet sind, das Feuerlöschrohr innerhalb des Gehäuses befestigt ist, ein erstes Ende des Feuerlöschrohrs mit dem Brandbekämpfungsmodul (130) verbunden ist, ein zweites Ende davon geschlossen ist, und das Feuerlöschrohr mit dem Löschmittel gefüllt ist; und
das Feuerlöschrohr konfiguriert ist zum: wenn eine Temperatur der mindestens einen elektrochemischen Zelle größer als oder gleich einer Temperaturschwelle ist, Abgeben des Löschmittels in das Innere des Gehäuses, in dem sich das Feuerlöschrohr befindet.

4. Brandbekämpfungssystem nach Anspruch 3, wobei das Feuerlöschrohr ein Feuererkennungsrohr ist.

5. Brandbekämpfungssystem nach Anspruch 3, wobei ein oder mehrere Ventile und ein oder mehrere Sensoren an dem Feuerlöschrohr angeordnet sind; und wenn ein beliebiger Sensor in dem einen oder den mehreren Sensoren erkennt, dass eine Temperatur größer als oder gleich der Temperaturschwelle ist, ein Teil oder alle des einen oder der mehreren Ventile in dem Feuerlöschrohr gesteuert werden, um sich zu öffnen, und das Löschmittel in das Innere des Gehäuses, in dem sich das Feuerlöschrohr befindet, abgegeben wird.

6. Brandbekämpfungssystem nach Anspruch 2, wobei das Brandbekämpfungssystem ferner ein Verbindungsmodul umfasst, ein erstes Ende des Verbindungsmoduls mit einer Schnittstelle eines Brandbekämpfungsmoduls (130) verbunden ist, ein zweites Ende davon mit dem Erkennungsmodul verbunden ist und ein drittes Ende davon mit der Batterie (120) verbunden ist.

7. Brandbekämpfungssystem nach einem der Ansprüche 1 bis 6, wobei das Brandbekämpfungssystem ferner ein Anzeigemodul umfasst, und das Anzeigemodul konfiguriert ist, um ein schematisches Diagramm einer Verteilung von Schränken in einem Geräteraum anzuzeigen und die Warninformationen und einen Fehlerort anzuzeigen, wenn das Brandbekämpfungssystem fehlerhaft ist.

8. Fehlerbestätigungsverfahren, wobei das Verfahren in dem Brandbekämpfungssystem nach einem der Ansprüche 1 bis 7 verwendet wird, das Brandbekämpfungssystem mindestens ein Brandbekämpfungsmodul (130) umfasst, das konfiguriert ist, um mit einem Löschmittel gefüllt zu werden, und das Verfahren umfasst:
Erhalten (S11) eines Innendruckwerts in einem ersten Brandbekämpfungsmodul (130), wobei das erste Brandbekämpfungsmodul (130) ein beliebiges des mindestens einen Brandbekämpfungsmoduls (130) ist; und
Erzeugen (S12) von Warninformationen, wenn der Druckwert in dem ersten Brandbekämpfungsmodul (130) eine voreingestellte Bedingung erfüllt, wobei die Warninformationen angeben, dass das Brandbekämpfungssystem fehlerhaft ist, wobei die Warninformationen erste Warninformationen und zweite Warninformationen einschließen;
wobei das Erzeugen von Warninformationen, wenn der Druckwert in dem ersten Brandbekämpfungsmodul (130) eine voreingestellte Bedingung erfüllt, umfasst:
Erzeugen (S12) der ersten Warninformationen, wenn ein Verringerungsbetrag des Druckwerts in dem ersten Brandbekämpfungsmodul (130) innerhalb einer voreingestellten Dauer größer als oder gleich einer ersten Änderungsschwelle ist,
wobei die erste Warninformationen angeben, dass eine Batterie (120), die mit dem ersten Brandbekämpfungsmodul (130) verbunden ist, brennt; und Erzeugen der zweiten Warninformationen, wenn der Verringerungsbetrag des Druckwerts in dem ersten Brandbekämpfungsmodul (130) innerhalb der voreingestellten Dauer geringer als die erste Änderungsschwelle und größer als eine zweite Änderungsschwelle ist,
wobei die zweiten Warninformationen angeben, dass ein Löschmittel in dem ersten Brandbekämpfungsmodul (130) austritt.

## Revendications

1. Système de lutte contre l'incendie, dans lequel le système de lutte contre l'incendie comprend un module de commande (110), au moins une batterie (120), et au moins un module de lutte contre l'incendie (130), et chaque module de lutte contre l'incendie (130) dans l'au moins un module de lutte contre l'incendie (130) est connecté à une ou plusieurs batteries (120) ;
un premier module de lutte contre l'incendie (130) est conçu pour être rempli d'un agent d'extinction et pour : lorsqu'une température d'une batterie cible (120) connectée au premier module de lutte contre l'incendie (130) est supérieure ou égale à un seuil de température, libérer l'agent d'extinction vers la batterie cible (120), dans lequel le premier module de lutte contre l'incendie (130) est l'un quelconque parmi l'au moins un module de lutte contre l'incendie (130) ; et
le module de commande (110) est configuré pour : obtenir une valeur de pression interne dans le premier module de lutte contre l'incendie (130), et lorsque la valeur de pression dans le premier module de lutte contre l'incendie (130) satisfait à une condition prédéfinie, générer des informations d'avertissement, dans lequel les informations d'avertissement indiquent que le système de lutte contre l'incendie est défectueux, dans lequel les informations d'avertissement comportent des premières informations d'avertissement et des secondes informations d'avertissement ;
dans lequel le module de commande (110) est en outre configuré pour générer les premières informations d'avertissement lorsqu'une quantité de réduction de la valeur de pression dans le premier module de lutte contre l'incendie (130) au cours d'une durée prédéfinie est supérieure ou égale à un premier seuil de changement, dans lequel les premières informations d'avertissement indiquent que la batterie (120) connectée au premier module de lutte contre l'incendie (130) est en train de brûler, dans lequel le module de commande (110) est en outre configuré pour générer les secondes informations d'avertissement lorsque la quantité de réduction de la valeur de pression dans le premier module de lutte contre l'incendie (130) au cours de la durée prédéfinie est inférieure au premier seuil de changement et supérieure à un second seuil de changement, dans lequel les secondes informations d'avertissement indiquent qu'un agent d'extinction dans le premier module de lutte contre l'incendie (130) fuit.

2. Système de lutte contre l'incendie selon la revendication 1, dans lequel le système de lutte contre l'incendie comprend en outre un module de détection ; et
le module de détection est configuré pour : détecter la valeur de pression dans le premier module de lutte contre l'incendie (130), et envoyer la valeur de pression dans le premier module de lutte contre l'incendie (130) au module de commande (110).

3. Système de lutte contre l'incendie selon la revendication 1 ou 2, dans lequel chacune parmi l'au moins une batterie (120) comprend un boîtier, un tuyau d'extinction d'incendie, et au moins une cellule électrochimique, le tuyau d'extinction d'incendie et l'au moins une cellule électrochimique sont disposés à l'intérieur du boîtier, le tuyau d'extinction d'incendie est fixé à l'intérieur du boîtier, une première extrémité du tuyau d'extinction d'incendie est raccordée au module de lutte contre l'incendie (130), une seconde extrémité de celui-ci est fermée, et le tuyau d'extinction d'incendie est rempli d'agent d'extinction ; et
le tuyau d'extinction d'incendie est conçu pour : lorsqu'une température de l'au moins une cellule électrochimique est supérieure ou égale à un seuil de température, libérer l'agent d'extinction à l'intérieur du boîtier dans lequel se trouve le tuyau d'extinction d'incendie.

4. Système de lutte contre l'incendie selon la revendication 3, dans lequel le tuyau d'extinction d'incendie est un tube de détection d'incendie.

5. Système de lutte contre l'incendie selon la revendication 3, dans lequel une ou plusieurs vannes et un ou plusieurs capteurs sont disposés sur le tuyau d'extinction d'incendie ; et lorsqu'un capteur quelconque parmi le ou les capteurs détecte qu'une température est supérieure ou égale au seuil de température, une partie ou la totalité de la ou des vannes dans le tuyau d'extinction d'incendie sont commandées pour s'ouvrir, et l'agent d'extinction est libéré à l'intérieur du boîtier dans lequel se trouve le tuyau d'extinction d'incendie.

6. Système de lutte contre l'incendie selon la revendication 2, dans lequel le système de lutte contre l'incendie comprend en outre un module de connexion, une première extrémité du module de connexion est connectée à une interface d'un module de lutte contre l'incendie (130), une deuxième extrémité de celui-ci est connectée au module de détection, et une troisième extrémité de celui-ci est connectée à la batterie (120).

7. Système de lutte contre l'incendie selon l'une quelconque des revendications 1 à 6, dans lequel le système de lutte contre l'incendie comprend en outre un module d'affichage, et le module d'affichage est configuré pour afficher un diagramme schématique de distribution d'armoires dans un local technique, et pour afficher les informations d'avertissement et un emplacement de défaut lorsque le système de lutte contre l'incendie est défectueux.

8. Procédé de confirmation de défaut, dans lequel le procédé est utilisé dans le système de lutte contre l'incendie selon l'une quelconque des revendications 1 à 7, le système de lutte contre l'incendie comprend au moins un module de lutte contre l'incendie (130) conçu pour être rempli d'un agent d'extinction, et le procédé comprend :
l'obtention (S11) d'une valeur de pression interne dans un premier module de lutte contre l'incendie (130), dans lequel le premier module de lutte contre l'incendie (130) est l'un quelconque parmi l'au moins un module de lutte contre l'incendie (130) ; et
la génération (S12) d'informations d'avertissement lorsque la valeur de pression dans le premier module de lutte contre l'incendie (130) satisfait à une condition prédéfinie, dans lequel les informations d'avertissement indiquent que le système de lutte contre l'incendie est défectueux, dans lequel les informations d'avertissement comportent des premières informations d'avertissement et des secondes informations d'avertissement ;
dans lequel la génération d'informations d'avertissement lorsque la valeur de pression dans le premier module de lutte contre l'incendie (130) satisfait à une condition prédéfinie comprend :
la génération (S12) des premières informations d'avertissement lorsqu'une quantité de réduction de la valeur de pression dans le premier module de lutte contre l'incendie (130) au cours d'une durée prédéfinie est supérieure ou égale à un premier seuil de changement, dans lequel les premières informations d'avertissement indiquent qu'une batterie (120) connectée au premier module de lutte contre l'incendie (130) est en train de brûler ; et
la génération des secondes informations d'avertissement lorsque la quantité de réduction de la valeur de pression dans le premier module de lutte contre l'incendie (130) au cours de la durée prédéfinie est inférieure au premier seuil de changement et supérieure à un second seuil de changement, dans lequel les secondes informations d'avertissement indiquent qu'un agent d'extinction dans le premier module de lutte contre l'incendie (130) fuit.
